# EUROPEAN PATENT SPECIFICATION

(11) **EP 1 967 637 B1**
(45) Date of publication and mention of the grant of the patent: **14.07.2010**
(21) Application number: 08151935.7
(22) Date of filing: 26.02.2008
(51) Int. Cl.: D06F 39/00, A47L 15/00, H01M 8/00

(54) **Home appliance system using high temperature fuel cell system and method of supplying super heated steam**
Haushaltssystem mit Hochtemperatur-Brennstoffzellensystem und Verfahren zur Erzeugung von überhitztem Dampf
Système d'appareil électrique utilisant un système de pile à combustible haute température et procédé pour la fourniture de vapeur surchauffée

(30) Priority: 05.03.2007 KR 20070021616
(43) Date of publication of application: 10.09.2008
(73) Proprietor: Samsung Electronics Co., Ltd., Suwon-si, Gyeonggi-do (KR)
(72) Inventor: Kim, Kyung Hoon, Sanghyeon-dong, Yongin-si Gyeonggi-do (KR); Choi, See Young, Yeongtong-gu, Suwon-si Gyeonggi-do (KR); Wang, Yong, Giheung-eup, Yongin-si Gyeonggi-do (KR)
(74) Representative: Grünecker, Kinkeldey, Stockmair & Schwanhäusser Anwaltssozietät

(56) References cited:
- GB-A- 635 755
- KR-A- 20020 056 171
- KR-A- 20020 056 173
- US-A1- 2006 267 235
- US-A1- 2007 277 960

## Description

### BACKGROUND

### 1. Field

The present invention relates to a home appliance system using a high temperature fuel cell system and a method of supplying super heated steam. More particularly, the present invention relates to a home appliance system using a high temperature fuel cell system and a method of supplying super heated steam, in which super heated steam generated from the high temperature fuel cell system is supplied to a cooker or a washing machine for cooking operation or washing operation.

### 2. Description of the Related Art

A fuel cell system converts chemical energy, which is created through oxidation of fuel, into electric energy. In the oxidation process of fuel, a great amount of heat is discharged together with electricity and water. This heat is used to heat rooms or water, to cook foodstuff, or to wash laundry. Such cooker and washing machine using the heat generated from the fuel cell system are disclosed in Korean Unexamined Patent Publication Nos. 10-2002-0056171 (cooker using fuel cell), and 10-2002-0056173 (washing machine using fuel cell).

As disclosed in Korean Unexamined Patent Publication No. 10-2002-0056171, the conventional cooker includes a fuel cell, a reformer for the fuel cell, and a steam generator that is installed at an end portion of a heating pipe extending from a stack to generate steam. In addition, a heat storage tank is installed in the fuel cell to store waste heat generated from the reformer or the stack. The steam generator includes a steam container having water therein. The water contained in the steam container is evaporated by means of heat applied thereto from the reformer, the stack, or the heat storage tank, so that steam is generated. This steam is supplied to a cooking chamber by means of an additional transfer unit.

In addition, as disclosed in Korean Unexamined Patent Publication No. 10-2002-0056173, the conventional washing machine using a fuel cell includes a heat storage unit that store waste heat, which is derived from the chemical reaction between hydrogen and oxygen, a hot water feeding unit that makes heat-exchange with the heat storage unit to feed water heated by the heat storage unit to an inner tub of the washing machine, and a steam generator connected to one side of the heat storage unit generate heat and communicated with the inner tub of the washing machine.

Both the conventional cooker and washing machine generate heat by using the fuel cell and store the heat in the heat storage tank such that the steam generator connected to the heat storage tank can generate steam and feed the steam to the cooker or the inner tub of the washing machine.

However, since the fuel cell cannot directly generate the steam, the conventional cooker and washing machine using the fuel cell must be equipped with the heat storage tank and the steam generator in order to produce the steam, so the manufacturing cost may increase.

In addition, since the heat must be stored in the heat storage tank to generate steam, heat loss may occur when storing heat in the heat storage tank, lowering the energy efficiency.

### SUMMARY

Accordingly, it is an aspect of the present invention to provide a home appliance system using a high temperature fuel cell system and a method of supplying super heated steam, in which super heated steam generated from the high temperature fuel cell system is supplied to each home appliance.

Additional aspects and/or advantages of the invention will be set forth in part in the description which follows and, in part, will be apparent from the description, or may be learned by practice of the invention.

The foregoing and/or other aspects of the present invention are achieved by providing a home appliance system according to the appended claim 1.

According to an aspect of the present invention, the high temperature fuel cell system may include a PEMFC (polymer electrolyte membrane fuel cell).

According to an aspect of the present invention, a steam valve may be installed in the steam path to adjust an amount of the super heated steam transferred to the home appliance.

According to an aspect of the present invention, the steam valve may be turned on/off by the home appliance.

Further, according to an aspect of the present invention, a flow-rate sensor and a temperature sensor may be installed in the steam path to measure a flow rate and a temperature of the super heated steam transferred to the home appliance.

In addition, the foregoing and/or other aspects of the present invention are achieved by providing a method of supplying super heated steam in a home appliance system according to the appended claim 6.

According to an aspect of the present invention, when a flow rate and a temperature of the super heated steam transferred to the home appliance are within a reference range, operating conditions of the high temperature fuel cell system are maintained, and the operating conditions are changed when the flow rate or the temperature of the super heated steam deviates from the reference range.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a schematic view showing a home appliance system using a high temperature fuel cell system according to an embodiment of the present invention;
FIG. 2 is a block view showing the structure of a high temperature fuel cell system shown in FIG. 1;
FIG. 3 is a block view showing a home appliance system using a high temperature fuel cell system according to an embodiment of the present invention; and
FIG. 4 is a flowchart showing a method for supplying super heated steam in a home appliance system using a high temperature fuel cell system according to an embodiment of the present invention.

### DETAILED DESCRIPTION OF THE EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

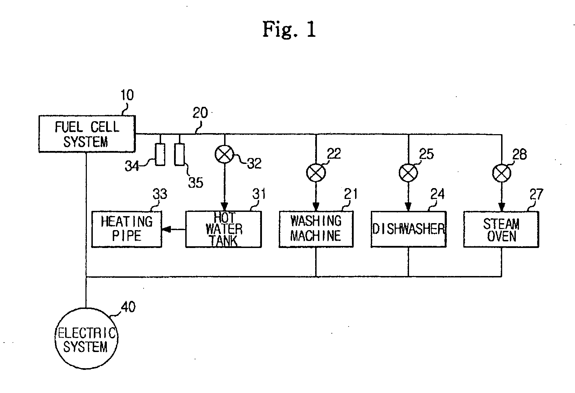

As shown in FIG. 1. a home appliance system according to an embodiment of the present invention includes a high temperature fuel cell system 10 that generates electricity and super heated steam, a steam path 20 for transferring super heated steam generated from the high temperature fuel cell system 10, and an electric system 40 connected to the high temperature fuel cell system 10. A washing machine 21, a dishwasher 24, a steam oven 27, and a hot water tank 31 are connected to the steam path 20.

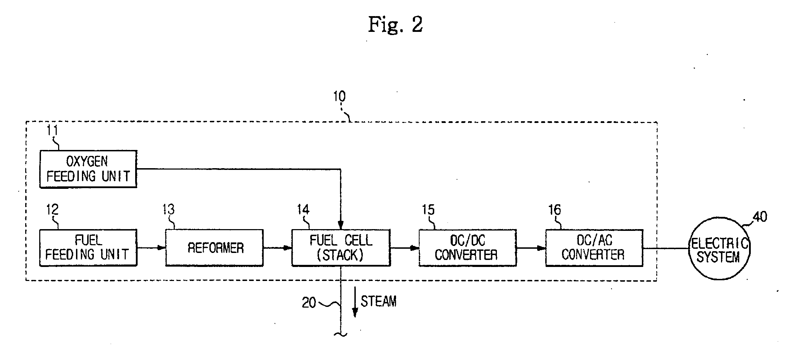

As shown in FIG. 2, the high temperature fuel cell system 10 includes an oxygen feeding unit 11, a fuel feeding unit 12, a reformer 13, fuel cell 14, a DC/DC converter 15 and a DC/AC converter (or inverter) 16. The oxygen feeding unit 11 feeds oxygen to the fuel cell 14, and the fuel feeding unit 12 feeds fuel to the reformer 13. Preferably, the fuel includes city gas for household use.

The reformer 13 produces hydrogen by heating the fuel and sends the hydrogen to the fuel cell 14. Since the reaction mechanism in the reformer 13 is generally known in the art, detailed description thereof will be omitted below (see, for example, Korean Unexamined Patent Publication No. 2003-72908).

The fuel cell 14 consists of a plurality unit cells (stack) (not shown), in which each unit cell includes an electrolyte plate (not shown) containing an electrolyte, a cathode (not shown) and an anode (not shown). The hydrogen fed into the anode is dissolved into a hydrogen ion and an electron, in which the hydrogen ion moves to the cathode through the electrolyte plate and the electron moves to the cathode through an external circuit. The oxygen fed into the cathode meets the hydrogen ion in the cathode, thereby producing water.

The electrolyte plate includes a polymer electrolyte plate, which is doped with polybenzimidazole, and the operational temperature of the fuel cell is about 150°C (high temperature type). Different from the present invention, the conventional PEMFC (polymer electrolyte membrane fuel cell) adopts a polymer electrolyte plate consisting of fluoric resin, SO3H (sulfonate group), etc., so the operational temperature of the fuel cell is in the range between the normal temperature and 80°C (low temperature type).

Thus, according to the conventional PEMFC, water created in the cathode remains in the liquid phase. However, according to the PEMFC of the present invention, water created in the cathode is heated so that the water is converted into super heated steam. This super heated steam is transferred to the steam path 20 connected to the fuel cell 14.

The DC/DC converter 15 boosts DC current generated from the fuel cell 14 and then outputs the DC current to the DC/AC converter 16. The DC current output from the fuel cell 14 has low voltage and high variation, so stable output voltage having a high level can be obtained by using the DC/DC converter 15. The DC/AC converter 16 converts the DC current, which is boosted by the DC/DC converter 15, into AC current and sends the AC current to the washing machine 21, etc.

Steam valves 22, 25, 28 and 32 are installed in the steam path 20 in order to adjust the amount of super heated steam transferred to the washing machine 21, the dishwasher 24, the steam oven 27, and the hot water tank 31. The steam valves 22, 25, 28 and 32 may include motor operated valves capable of adjusting the opening degree thereof, or on/off valves simply performing the on/off operations. In addition, a flow-rate sensor 34 and a temperature sensor 35 are installed in the steam path 20 in order to measure the flow rate and the temperature of the super heated steam flowing through the steam path 20.

The washing machine 21, the dishwasher 24 or the steam oven 27 performs the washing, cleaning or cooking operation using the super heated steam. The super heated steam passing through the steam path 20 makes heat exchange with water contained in the hot water tank 31, so the water is heated. The heated water is supplied to a heating pipe 33 connected to the hot water tank 31.

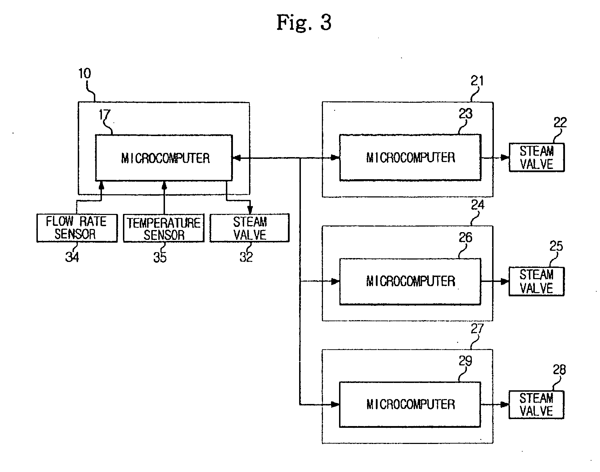

The home appliance system using the high temperature fuel cell system as shown in FIG. 3 according to one embodiment of the present invention further includes steam valves 22, 25 and 28 adjusting the amount of steam supplied to the home appliances 21, 24 and 27, microcomputers 23, 26 and 29 controlling the home appliances 21, 24 and 27, a steam valve 32 adjusting the amount of super heated steam flowing to the hot water tank 31, and a microcomputer 17 controlling the high temperature fuel cell system 10 in addition to components shown in FIGS. 1 and 2.

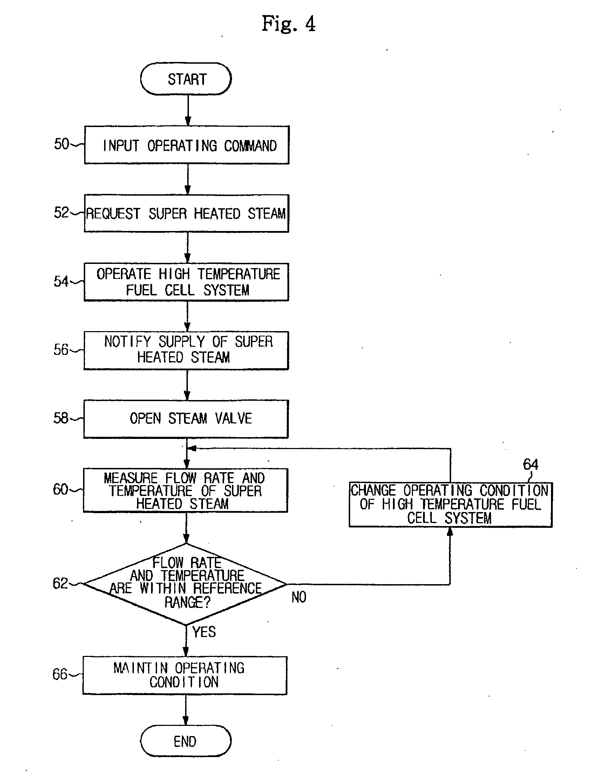

Hereinafter, the method of supplying super heated steam in the home appliance system using the high temperature fuel cell system according to one embodiment of the present invention will be described with reference to FIG. 4. When the user inputs the operating command for the washing machine 21, etc., the microcomputers 23, 26 and 29 of the home appliances 21, 24 and 27 determine whether the super heated steam is necessary for operation (50). If the super heated steam is necessary for operation, the microcomputers 23, 26 and 29 request the microcomputer 17 of the high temperature fuel cell system 10 to supply the super heated steam through data communication (52).

Upon receiving the request from the microcomputers 23, 26 and 29, the microcomputer 17 of the high temperature fuel cell system 10 controls the fuel cell 14 to generate the super heated steam by feeding oxygen and fuel to the fuel cell 14 (54). Then, the microcomputer 17 of the high temperature fuel cell system 10 sends a signal to the microcomputers 23, 26 and 29 of the home appliances 21, 24 and 27 through data communication to notify that the super heated steam is supplied (56).

As the signal is received in the microcomputers 23, 26 and 29 of the home appliances 21, 24 and 27 from the microcomputer 17 of the high temperature fuel cell system 10, the microcomputers 23, 26 and 29 open the steam valves 22, 25 and 28 (58). Thus, the super heated steam is transferred from the fuel cell 14 to the home appliances 21, 24 and 27 through the stream valves 22, 25 and 28 and the steam path 20.

The flow-rate sensor 34 and the temperature sensor 35 measure the flow rate and the temperature of the super heated steam flowing through the steam path 20 and output the measurement value to the microcomputer 17 of the high temperature fuel cell system 10 (60). The microcomputer 17 of the high temperature fuel cell system 10 determines whether the measurement value of the flow-rate sensor 34 and the temperature sensor 35 is within the reference range (62).

At this time, the reference range for the flow rate may vary depending on the type or the number of the home appliances that request the super heated steam. Therefore, the microcomputer 17 of the high temperature fuel cell system 10 preferably stores the reference range for the flow rate corresponding to the type or the number of the home appliances that request the super heated steam.

The reference range for the temperature is preset to prevent the super heated steam having the excessively low temperature from being supplied to the home appliances. The reference range for the temperature may vary depending on the type of the home appliances of the home appliance system.

If the flow rate and the temperature of the super heated steam flowing through the steam path 20 are within the reference range, the microcomputer 17 of the high temperature fuel cell system 10 keeps the present operating condition. However, if the flow rate or the temperature of the super heated steam deviates from the reference range, the microcomputer 17 of the high temperature fuel cell system 10 changes the operating condition, such as the amount of fuel being supplied, such that the flow rate and the temperature of the super heated steam can be set within the reference range. Then, the process returns to step 60.

In this manner, the super heated steam generated from the fuel cell 14 is supplied to the home appliances (i.e., the washing machine 21, etc.), so the home appliances can perform the washing or cooking operation using the super heated steam.

As described above, according to the present invention, the super heated steam generated from the fuel cell is transferred to the home appliances to perform the washing or cooking operation, so the heat storage tank or the steam generator used for generating the super heated steam is not necessary.

Accordingly, the manufacturing cost for the home appliances can be reduced and heat loss occurring when waste heat is stored in the heat storage tank can be prevented.

Although a few embodiments of the present invention have been shown and described, it would be appreciated by those skilled in the art that changes may be made in these embodiments without departing from the principles of the invention, the scope of which is defined in the claims.

## Claims

1. A home appliance system comprising:
a fuel cell system (10) in which fuel is reacted with oxygen to generate electricity and steam;
a steam path (20) through which the steam is transferred; and
a home appliance (21, 24, 27, 31) connected to the steam path (20) to use the steam;
**characterized in that**
the fuel cell system (10) is a high temperature fuel cell system (10); and
the steam is super heated steam generated in each cathode of the high temperature fuel cell system (10).

2. The home appliance system as claimed in claim 1, wherein the high temperature fuel cell system comprises a PEMFC (polymer electrolyte membrane fuel cell).

3. The home appliance system as claimed in claim 1, wherein a steam valve (22, 25, 28, 32) is installed in the steam path to adjust an amount of the super heated steam transferred to the home appliance.

4. The home appliance system as claimed in claim 3, wherein the steam valve is turned on/off by the home appliance.

5. The home appliance system as claimed in claim 1, wherein a flow-rate sensor (34) and a temperature sensor (35) are installed in the steam path to measure a flow rate and a temperature of the super heated steam transferred to the home appliance.

6. A method of supplying steam in a home appliance system using a fuel cell system (10), the method comprising:
requesting the fuel cell system (10) to supply the steam to at least one home appliance (21, 24, 27, 31) connected to the fuel cell system through a steam path (20); and
transferring the steam to the home appliance to allow the home appliance to perform cooking, washing or cleaning operation;
**characterized by**
sending a signal from the fuel cell system to the home appliance to notify the home appliance of the supply of the steam when the steam is generated by the fuel cell system;
the fuel cell system (10) being a high temperature fuel cell system (10); and
the steam being super heated steam generated in each cathode of the high temperature fuel cell system.

7. The method as claimed in claim 6, wherein, when a flow rate and a temperature of the super heated steam transferred to the home appliance are within a reference range, operating conditions of the high temperature fuel cell system are maintained, and the operating conditions are changed when the flow rate or the temperature of the super heated steam deviates from the reference range.

## Patentansprüche

1. Hausgerätesystem, das umfasst:
ein Brennstoffzellensystem (10), in dem Brennstoff mit Sauerstoff zur Reaktion gebracht wird, um Elektrizität und Dampf zu erzeugen;
einen Dampfweg (20), über den der Dampf überführt wird; und
ein Hausgerät (21, 24, 27, 31), das mit dem Dampfweg (20) verbunden ist, um den Dampf zu nutzen;
**dadurch gekennzeichnet, dass**
das Brennstoffzellensystem (10) ein Hochtemperatur-Brennstoffzellensystem (10) ist; und
der Dampf überhitzter Dampf ist, der in jeder Kathode des Hochtemperatur-Brennstoffzellensystems (10) erzeugt wird.

2. Hausgerätesystem nach Anspruch 1, wobei das Hochtemperatur-Brennstoffzellensystem eine Polymerelektrolyt-Brennstoffzelle (polymer electrolyte membrane fuel cell-PEMFC) umfasst.

3. Hausgerätesystem nach Anspruch 1, wobei ein Dampfventil (22, 25, 28, 32) in dem Dampfweg installiert ist, um eine zu dem Hausgerät überführte Menge des überhitzten Dampfes zu regulieren.

4. Hausgerätesystem nach Anspruch 3, wobei das Dampfventil durch das Hausgerät an/abgeschaltet wird.

5. Hausgerätesystem nach Anspruch 1, wobei ein Durchflusssensor (34) und ein Temperatursensor (35) in dem Dampfweg installiert sind, um einen Durchfluss und eine Temperatur des zu dem Hausgerät überführten überhitzten Dampfes zu messen.

6. Verfahren zum Zuführen von Dampf in einem Hausgerätesystem, bei dem ein Brennstoffzellensystem (10) eingesetzt wird, wobei das Verfahren umfasst:
Anfordern von Dampfzufuhr von dem Brennstoffzellensystem (10) zu wenigstens einem Hausgerät (21, 24, 27, 31), das mit dem Brennstoffzellensystem über einen Dampfweg (20) verbunden ist; und
Überführen des Dampfes zu dem Hausgerät, so dass das Hausgerät einen Koch-, Wasch- oder Reinigungsvorgang durchführen kann;
**gekennzeichnet durch**
Senden eines Signals von dem Brennstoffzellensystem zu dem Hausgerät, um das Hausgerät über die Zufuhr des Dampfes zu informieren, wenn der Dampf **durch** das Brennstoffzellensystem erzeugt wird;
wobei das Brennstoffzellensystem (10) ein Hochtemperatur-Brennstoffzellensystem (10) ist; und
der Dampf überhitzter Dampf ist, der in jeder Kathode des Hochtemperatur-Brennstoffzellensystems erzeugt wird.

7. Verfahren nach Anspruch 6, wobei, wenn ein Durchfluss und eine Temperatur des zu dem Hausgerät überführten überhitzten Dampfes innerhalb eines Bezugsbereiches liegen, Betriebsbedingungen des Hochtemperatur-Brennstoffzellensystems aufrechterhalten werden, und die Betriebsbedingungen geändert werden, wenn der Durchfluss oder die Temperatur des überhitzten Dampfs von dem Bezugsbereich abweicht.

## Revendications

1. Système pour appareil ménager comprenant :
un système de pile à combustible (10) dans lequel le combustible est mis à réagir avec de l'oxygène pour produire de l'électricité et de la vapeur ;
une ligne de vapeur (20) à travers laquelle la vapeur est transférée ; et
un appareil ménager (21, 24, 27, 31) relié à la ligne de vapeur (20) pour utiliser la vapeur;
**caractérisé en ce que**
le système pour appareil ménager (10) est un système de pile à combustible haute température (10) ; et
la vapeur est de la vapeur surchauffée produite dans chaque cathode du système de pile à combustible haute température (10).

2. Système pour appareil ménager selon la revendication 1, dans lequel le système de pile à combustible haute température comprend une pile PEMFC (pile à combustible à membrane électrolytique polymère).

3. Système pour appareil ménager selon la revendication 1, dans lequel un robinet à vapeur (22, 25, 28, 32) est installé sur la ligne de vapeur pour ajuster une quantité de la vapeur surchauffée transférée à l'appareil ménager.

4. Système pour appareil ménager selon la revendication 3, dans lequel le robinet à vapeur est réglé en position ouverte/fermée par l'appareil ménager.

5. Système pour appareil ménager selon la revendication 1, dans lequel un capteur de débit (34) et un capteur de température (35) sont installés sur la ligne de vapeur pour mesurer un débit et une température de la vapeur surchauffée transférée à l'appareil ménager.

6. Procédé pour amener de la vapeur dans un système pour appareil ménager à l'aide d'un système de pile à combustible (10), ledit procédé consistant à :
demander au système de pile à combustible (10) d'amener la vapeur dans au moins un appareil ménager (21, 24, 27, 31) relié au système de pile à combustible par l'intermédiaire d'une ligne de vapeur (20) ; et
transférer la vapeur à l'appareil ménager pour permettre à celui-ci d'accomplir une opération de cuisson, de lavage ou de nettoyage ;
**caractérisé par**
l'envoi d'un signal depuis le système de pile à combustible en direction de l'appareil ménager pour signaler à l'appareil ménager l'alimentation en vapeur lorsque la vapeur est produite par le système de pile à combustible ;
le système de pile à combustible (10) étant un système de pile à combustible haute température (10) ; et
la vapeur étant de la vapeur surchauffée produite dans chaque cathode du système de pile à combustible haute température (10).

7. Procédé selon la revendication 6, dans lequel, lorsqu'un débit et une température de la vapeur surchauffée transférée à l'appareil ménager se situent dans une plage de référence, les conditions de fonctionnement du système de pile à combustible haute température sont maintenues, et les conditions de fonctionnement sont modifiées lorsque le débit ou la température de la vapeur surchauffée s'écarte de cette plage de référence.
